# EUROPEAN PATENT SPECIFICATION

(11) **EP 3 232 789 B1**
(45) Date of publication and mention of the grant of the patent: **09.02.2022**
(21) Application number: 15808653.8
(22) Date of filing: 15.12.2015
(51) Int. Cl.: A01N 59/00, A01N 43/64, A01N 25/08, A01N 37/06, A01N 37/46, A01N 49/00, A01N 47/16, A01P 1/00, A01P 17/00, C02F 1/76

(54) **TABLETS FOR TREATING AND DISINFECTING WATER**
TABLETTEN ZUR BEHANDLUNG UND DESINFEKTION VON WASSER
COMPRIMÉS DE TRAITEMENT ET DE DÉSINFECTION D'EAU

(30) Priority: 16.12.2014 ES 201431845
(43) Date of publication of application: 25.10.2017
(73) Proprietor: Ercros, S.A., 08014 Barcelona (ES)
(72) Inventor: CORONAS CERESUELA, Joaquín, 50015 Zaragoza (ES); PASETA MARTÍNEZ, Lorena, 50109 Alpartir (ES); SIMÓN GAUDÓ, Elena, 22600 Sabiñanigo (ES); GRACIA GORRIA, Francisco Andrés, 22700 Jaca (ES); ESPAÑA MARAVER, Francisco José, 08036 Barcelona (ES)
(74) Representative: ZBM Patents - Zea, Barlocci & Markvardsen
(86) International application number: PCT/EP2015/079726
(87) International publication number: WO 2016/096805

(56) References cited:
- WO-A2-2007/122625
- WO-A2-2008/149232
- CN-A- 102 696 692
- FR-A1- 2 982 854
- KR-B1- 101 349 909

## Description

### TECHNICAL FIELD

The present invention relates to tablets used for treating and disinfecting water such as swimming pool water.

### PRIOR ART

The use of halogenated derivatives of isocyanuric acid has been widely known in various industrial sectors for many years. In particular, chloroisocyanuric acids and the salts thereof are generally used for treating water, for example in swimming pools and spas; in detergent formulation; as well as in bleaching agent and cleaning product formulations. They have also been used for sanitising equipment for processing foodstuffs; treating water in open cooling towers; bleaching paper pulp, etc.

The use of tablets of trichloroisocyanuric acid (TCCA) or sodium dichloroisocyanurate (DCCA), which are hypochlorous acid releasers, is already a great advantage with respect to the use of hypochlorous acid solutions or even chlorine gas for treating the swimming pool water in terms of safety, performance and convenience or ease of use. Furthermore, it has the important advantage of stabilising the action of the chlorine by means of residual cyanuric acid which stops the destructive effect of ultraviolet rays.

These compounds are normally formulated in the form of powder or granules, however dosing is easier when they are in the form of tablets.

There is a need to develop improved tablets for treating and disinfecting water comprising a halogenated derivative of isocyanuric acid together with other additives that enable additional desirable properties to be conferred on the tablets used in the prior art, such as for example insect repellents, odorisers, etc. However, said additives are generally volatile products, chemically incompatible with the halogenated derivatives of isocyanuric acid. This chemical incompatibility is translated into the release of chlorine gas as a result of the decomposition of the chloroisocyanuric acid in the presence of the additive, which in turn is translated into a reduction of the useful life of the tablet, loss of effectiveness and decomposition, with the safety and environmental problems that the release of chlorine entails.

Among the solutions proposed in the prior art is the example described in the patent application GB1281796 wherein chloroisocyanuric acid compositions with colouring agents are prepared, which are sensitive to the action of the halogenated derivatives of isocyanuric acid by coating said colourants with an inorganic salt soluble in water and forming hydrates prior to the mixture thereof with the rest of the components.

The document FR2982854, which represents the closest prior art, describes tablets comprising TCCA, DCCA and/or the salts thereof for treating swimming pools. The tablets comprise, together with the chloroisocyanuric acid agent, an insect repellent additive or a fragrance, which is a strongly reductive, volatile agent. The tablets described have at least two layers, the first comprising the insect repellent or the fragrance and the second layer containing the TCCA. The insect repellent agent, or the fragrance, is absorbed on an absorbent material and said absorbent compound is included in an inert matrix of a salt of strong acid and strong compatible base. As two different layers coexist, the tablet does not dissolve homogenously; the layer formed by the repellent agent and the inorganic salt is dissolved noticeably quicker than the layer formed by the oxidising agent, thus there being no controlled release of the repellent.

In spite of the teachings of the prior art, there is still a need to provide tablets that are stable and maintain effectiveness for treating and disinfecting water, which would be expected to be obtained given it simultaneously contains a halogenated derivative of isocyanuric acid and a volatile additive, chemically incompatible with said halogenated derivative of isocyanuric acid.

### DESCRIPTION OF THE INVENTION

As defined in the appended claims, the inventors have identified novel tablets comprising a halogenated derivative of isocyanuric acid together with an additive, chemically incompatible with the latter, which is encapsulated in a microporous or mesoporous material such that the storage time of the tablet is prolonged without causing decomposition of the halogenated derivative of the isocyanuric acid, whilst the controlled release of the additive is achieved and the expected effectiveness of the active components of the tablet is maintained.

This specific combination has a set of improved properties that do not have, as a whole, other commonly used combinations of reactive agents that release chlorine. Thus the encapsulated additive and the active components of the tablet of the present invention do not chemically interact with each other, such that no deterioration thereof is produced, and consequently the halogenated compound is maintained stable. The processing of the tablet with the additives of interest is also improved; such that if they are not encapsulated in the porous matrices, the homogenous mixture thereof with the rest of the components of the tablet would be difficult. Likewise, the dissolution rate of the tablets is not altered by the presence of the encapsulated additive. Furthermore, the tablets of the invention do not leave residues to be treated in the aqueous phase. Lastly, the release of the additive in the water is carried out in a controlled manner.

Thus, a first aspect of the present invention relates to a tablet comprising a) a halogenated derivative of isocyanuric acid selected from trichloroisocyanuric acid, dichloroisocyanuric acid or a salt thereof; and b) a volatile additive, chemically incompatible with the halogenated derivative of isocyanuric acid, which is an insect repellent selected from citronellic acid, geranic acid, geraniol, IR 3535 (ethyl 3-[acetyl(butyl)amino]propanoate) and icaridin, encapsulated in a microporous or mesoporous material which has a pore size of between 0.3 nm and 50 nm; a pore volume of between 0.05 cm³/g and 2 cm³/g; and a specific surface area of between 100 m²/g and 5000 m²/g; the microporous or mesoporous material is selected from a mica, a microporous silica, a mesoporous silica, a pyrogenic silica a crystalline silica, a precipitated silica, a gel silica, an alumina, MCM-41, SBA-15, kaolin, smectite, vermiculite, attapulgite, sepiolite, clinoptilolite, mordenite, zeolite A, zeolite X, silicalite, ZSM-5, HKUST-1, MIL-53, MIL-88 A (Al).

The chemical incompatibility of the additive with the halogenated derivative of isocyanuric acid is characterised in that said additive causes the release of a quantity of chlorine gas of at least 15 mg Cl₂ when said additive without being encapsulated, is put into contact with the halogenated derivative; the method of measuring said release of chlorine gas comprises the steps:
i) preparing a mixture of additive and halogenated derivative, wherein the quantity of additive is 0.1 % by weight in the mixture,
ii) placing in the stove at 60 ± 2 °C for 15 hours,
iii) bubbling the gas released into a recipient containing a mixture of potassium iodide 10% by weight and sulphuric acid 10 % by weight, and
iv) titrating the iodine released with sodium thiosulphate 0.1 N.

The iodine released is calculated with the formula: mg Chlorine = Volume thiosulphate (ml) x 0.1 N x 35.45 mg chlorine/milliequivalents of chlorine.

In a preferred embodiment, the tablet of the invention is characterised in that the halogenated derivative of isocyanuric acid is selected from trichloroisocyanuric acid, dichloroisocyanuric acid and the salts thereof. The salts of trichloroisocyanuric acid or of dichloroisocyanuric acid are alkali metal salts, such as for example sodium or potassium salts or alkaline earth metal salts, such as for example magnesium or calcium salts. According to a more preferred embodiment, the halogenated derivative of isocyanuric acid is selected from trichloroisocyanuric acid and sodium dichloroisocyanurate.

The tablets of the present invention contain a quantity of the halogenated derivative of isocyanuric acid between 90 % and 99 % by weight with respect to the total of the tablet. Preferably between 92.5% and 98.5% by weight with respect to the total of the tablet, between 94 % and 98 % by weight with respect to the total of the tablet being more preferred.

In the context of the present invention, the term "microporous" refers to those organic or inorganic materials that have pores with a diameter below 2 nm; while the term "mesoporous" refers to those organic or inorganic materials that have pores with a diameter of between 2 to 50 nm.

Microporous and mesoporous materials suitable for preparing the tablets of the present invention are those that have a pore size of between 0.3 nm and 50 nm; a pore volume of between 0.05 cm³/g and 2 cm³/g; and a specific surface of between 100 m²/g and 5000 m²/g. Preferably, the microporous or mesoporous material has a pore size of between 0.4 nm and 15 nm; a pore volume of between 0.1 cm³/g and 1.5 cm³/g; and a specific surface of between 150 m²/g and 2000 m²/g.

The pore size, pore volume and specific surface are measured using methods known in the art. The adsorption techniques for determining the surface (BET area), volume and pore size distribution of a solid material is based on the phenomena of gas and liquid adsorption in the interphase between the solid under examination or adsorbent and the fluid which is adsorbed or adsorbate. The fluid is deposited on the solid like a monolayer, the thickness thereof increases with the successive increases of pressure balance towards the saturation pressure of the fluid.

The BET area analysis provides the value of the surface area calculated by the Stephen Brunauer, Paul Hugh Emmett, and Edward Teller method. The information obtained from the adsorbed volume allows the area, porous distribution, the pore size and volume in the sample to be determined.

A Tristar device from Micromeritics has been used in this case.

Typically, the quantity of additive encapsulated in the microporous or mesoporous material is between 0.1 g additive/ g material and 1.5 g additive/ g material. The limits are marked by the quantity that the microporous or mesoporous material allows.

According to an embodiment of the present invention, the tablet comprises a quantity of additive of between 0.05 % and 1 % by weight with respect to the total weight of the tablet. Preferably, the tablet comprises a quantity of additive of between 0.1 % and 0.5 % by weight with respect to the total weight of the tablet, more preferably between 0.1 % and 0.2% by weight with respect to the total weight of the tablet.

The confirmation of the encapsulation of the additive in the pores of the microporous or mesoporous material, as well as determining the quantity of additive encapsulated, can be carried out by means of different known techniques. For example, by means of FTIR spectrometry and thermogravimetry respectively.

The microporous or mesoporous materials suitable for carrying out the present invention are those that meet the properties of pore size, pore volume and specific surface previously indicated. Furthermore, said materials should be chemically compatible with the halogenated derivative of isocyanuric acid used such that they do not cause the release of a quantity of chlorine gas greater than 15 mg Cl₂ gas when they are put into contact with the halogenated derivative of isocyanuric acid, when said release of chlorine gas is measured according to the method previously described. According to a preferred embodiment, the microporous or mesoporous material should not cause the release of a quantity of chlorine gas greater than 7.0 mg Cl₂ gas /100 g halogenated derivative of isocyanuric acid when it is put into contact with the halogenated derivative of isocyanuric acid.

Thus the microporous or mesoporous materials suitable for preparing the tablets of the present invention are selected from a mica, a microporous silica, a mesoporous silica, a pyrogenic silica, a crystalline silica, a precipitated silica, a gel silica, an alumina, MCM-41, SBA-15, kaolin, smectite, vermiculite, attapulgite, sepiolite, clinoptilolite, mordenite, zeolite A, zeolite X, silicalite, ZSM-5, HKUST-1, MIL-53, MIL-88A (Al). The additive is an insect repellent selected from citronellic acid, geranic acid, geraniol, IR3535 (ethyl 3-[acetyl(butyl)amino]propanoate) and icaridin.

The tablet of the present invention may also comprise other additional components selected from the group consisting of lubricants, flocculants, algaecides, ion scavengers responsible for the hardness of the water, and combinations of the same.

Typically, these additional components, which can be present in the tablet, are in a quantity of between 1 % and 8 % by weight with respect to the total of the tablet.

Examples of lubricants include, amongst others, boric acid, calcium and magnesium stearates or mica. Examples of flocculants include, amongst others, aluminium sulphate and/or aluminium polyhydroxy chloride and mixtures of these. Examples of algaecides include, amongst others, iron sulphate, endothall, quinoclamine, N-alkyl dimethyl benzyl ammonium chlorides or bromides, calcium hypochlorite and/or dichlorophen and mixtures of these. Examples of scavengers of ions responsible for the hardness of the water include aminopolycarboxylates, such as ethylenediaminetetraacetic acid (EDTA), polyphosphates such as sodium hexametaphosphate, phosphonates such as amino trimethylene phosphonic acid, diphosphonic hydroxyethane and/or hydroxycarboxylates such as citric acid, tartaric acid and gluconic acid and mixtures of these.

According to a preferred embodiment, the quantity of lubricant in the tablet is between 0.5 % and 1.5 % by weight.

In a preferred embodiment, the quantity of flocculant in the tablet is between 1 % to 5 % by weight.

In a preferred embodiment, the quantity of algaecide in the tablet is between 1 % to 4 % by weight.

In a preferred embodiment, the quantity of scavenger in the tablet is between 0.1 % to 1 % by weight.

The tablets of the present invention have the capacity to release chlorine in an aqueous medium; therefore, they are useful for disinfecting and treating water. Thus, a second aspect of the invention is the use of the tablets of the present invention for treating and disinfecting water.

Another aspect of the invention relates to preparing the tablets of the present invention. The method comprises: a) encapsulating the additive in the microporous or mesoporous material; b) mixing the halogenated derivative of isocyanuric acid with the additive encapsulated in the microporous or mesoporous material; and c) compressing the mixture.

The additive, chemically incompatible with the halogenated derivative of isocyanuric acid is encapsulated within the pores of the microporous or mesoporous material. Different methods of encapsulation are known in the art, which can be used in the present invention. Thus, for example, the additive to be encapsulated can be dissolved or suspended into a suitable solvent and subsequently the microporous or mesoporous material is submerged in the resulting solution for an adequate period of time, until the encapsulation of the additive within the pores of the material is achieved following the elimination of the solvent. Alternatively, for example in the case of using metal-organic frameworks (MOF) as porous material, it is possible to carry out the encapsulation of the additive both in one single step and in two steps. In the two-step process, firstly the MOF should be prepared and then the activated MOF is provided and on the latter is poured the additive and it is left under agitation for a determined period of time and lastly it is recovered by centrifugation. In the process with one single step, the additive is added to the synthesis medium of MOF with the intention of the latter being retained in the pores during the formation of the MOF.

The tablets of the invention can alternatively be defined by the method of preparation thereof and therefore as a tablet obtainable by the method comprising a) encapsulating the additive in the microporous or mesoporous material; b) mixing the halogenated derivative of isocyanuric acid with the additive encapsulated in the microporous or mesoporous material; and c) compressing the mixture.

### BRIEF DESCRIPTION OF THE DRAWINGS

Particular embodiments of the present invention are described below by way of a non-limiting example, with reference to the attached drawings, in which:
Figure 1. Graph of the infrared spectroscopy analysis (FTIR using an IRAffinity-1 device) of the silica, the additive and the additive encapsulated in the silica of example 1, revealing the presence of the additive in the material called additive@silica.
Figure 2. Thermogravimetric analysis (using a TGA/STDA 851e device from Mettler Toledo) of the silica, the additive and the additive encapsulated in the silica of example 1, which allows the quantity of additive encapsulated to be quantified, reflects 56 % of additive encapsulated in the silica (additive@silica).
Figure 3. Graph of the infrared spectroscopy analysis (FTIR using an IRAffinity-1 device) of the activated MOF, the additive and the additive encapsulated in the MOF of example 2, revealing the presence of the additive in the material called additive@MOF.
Figure 4. Thermogravimetric analysis (using a TGA/STDA 851e device from Mettler Toledo) of the MOF, the additive and the additive encapsulated in the MOF of example 2, which allows the quantity of additive encapsulated to be quantified, reflects 19% of additive encapsulated in the MOF (additive@MOF).
Figure 5. Graph of the infrared spectroscopy analysis (FTIR using an IRAffinity-1 device) of the MOF, the additive and the additive encapsulated in the MOF of example 3, revealing the presence of the additive in the material called additive@MOF.
Figure 6. Thermogravimetric analysis (using a TGA/STDA 851e device from Mettler Toledo) of the MOF, the additive and the additive encapsulated in the MOF of example 3, which allows the quantity of additive encapsulated to be quantified, reflects 26% of additive encapsulated in the MOF (additive@MOF).
Figure 7. Graph of the infrared spectroscopy analysis (FTIR using an IRAffinity-1 device) of the MOF, the additive and the additive encapsulated in the MOF of example 4, revealing the presence of the additive in the material called additive@MOF.
Figure 8. Thermogravimetric analysis (using a TGA/STDA 851e device from Mettler Toledo) of the MOF, the additive and the additive encapsulated in the MOF of example 4, which allows the quantity of additive encapsulated to be quantified, reflects 14% of additive encapsulated in the MOF (additive@MOF).

### DETAILED DESCRIPTION OF EMBODIMENTS

### Example 1: Silica+Additive:

500 mg of previously desiccated silica was prepared in a Petri dish and on this was poured the volume corresponding to 500 mg of additive previously dissolved in 2.5 mL of ethanol to facilitate the mixture and have better homogenisation. With the aid of a spatula, both substances were mixed until a homogenous mixture was obtained which was left to dry in the air. The silica used had a specific BET surface area (using a Tristar device from Micromeritics) of 182.3±0.6 m²/g, a pore volume of 0.62 cm³/g and an average pore size of 13.6 nm.

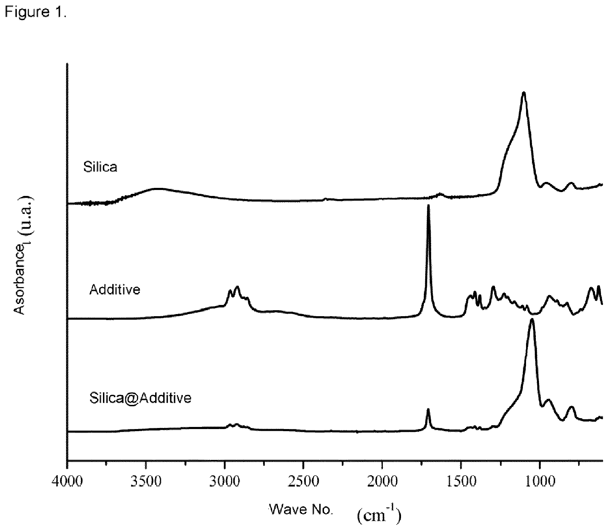

Figure 1 presents the infrared spectroscopy analysis (FTIR, using an IRAffinity-1 device) of the silica, the additive and the additive encapsulated in the silica, revealing the presence of the additive in the material called additive@silica.

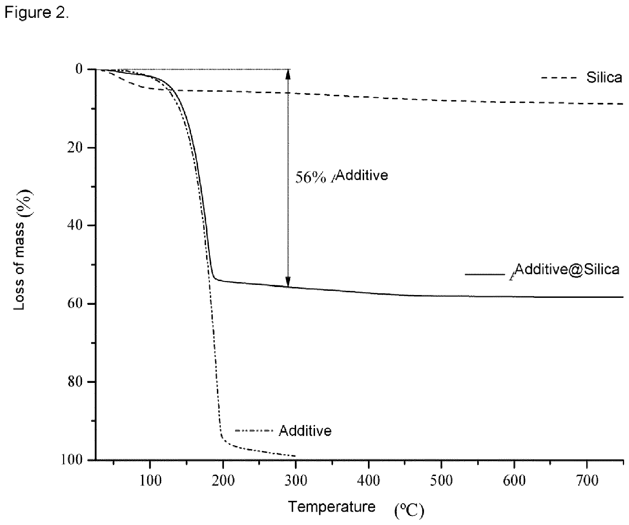

Thermogravimetric analysis (using a TGA/STDA 851e device from Mettler Toledo), which allows the quantity of encapsulated additive be quantified, reflects 56% of encapsulated additive in the silica (additive@silica), as shown in figure 2.

Even having a pore size (13.6 nm) much greater than the encapsulants, which will be seen further on, the silica has the capacity to homogenously disperse the additive on the surface thereof and then in the tablet formulated with the silica.

The results obtained for different additives encapsulated in silica following the method previously described are gathered in table 1:

**Table 1.**

| **Additive** | **% Encapsulated (g additive/g solid total)x100** |
|---|---|
| Geranic acid | 55.7 |
| Citronellic acid | 56.9 |
| Icaridin | 53.5 |
| IR3535 | 58.7 |
| Geraniol | 55.0 |

### Example 2: MOF+additive (in two steps):

100 mg of activated MOF (MIL-53 or MIL-88 A (Al)) was prepared in a vial and 1 mL of the additive of interest was poured on the same. Said vial was left under agitation at 60 °C for one, two, four or seven days. After this time, the solid was recovered by centrifuging at 10,000 rpm for 10 minutes, it was washed once with ethanol and was recovered again by means of centrifugation under the same conditions and was left to dry in the air.

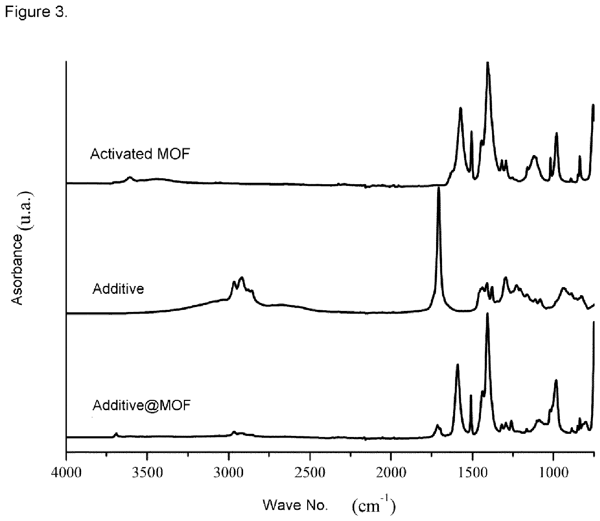

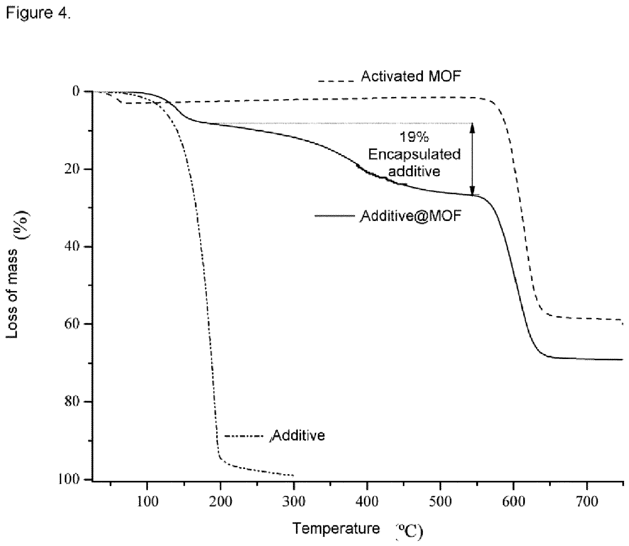

Both the FTIR spectroscopy and the thermogravimetry analysis can be observed in figures 3 and 4, in this specific case with 19 % of encapsulated additive.

This same thermogravimetry analysis was carried out for all the encapsulations using MIL-53 as MOF and with various additives and with different encapsulation times. In table 2 below, the results obtained are shown:

**Table 2.**

| **Additive** | **% Encapsulated (g additive/g dry solid)x100** | | | |
|---|---|---|---|---|
| | **1 day** | **2 days** | **4 days** | **7 days** |
| Geranic acid | 17.2 | 33.4 | 35.3 | 44.0 |
| Citronellic acid | 19.2 | 22.5 | 25 | 25.1 |
| Icaridin | 27.0 | 20.5 | 24.9 | 24.9 |
| IR3535 | 26.0 | 22.1 | 26.1 | 25.2 |
| Geraniol | 22.1 | 32.0 | 29.1 | 36.7 |

In the case of MIL-88 A (Al), the encapsulation was only carried out for a period of 3 days. Like for MIL-53, FTIR analysis was carried out on the samples to check for the presence of the additive in the MOF and thermogravimetry was carried out to determine the quantity of encapsulated additive. Table 3 gathers the results of encapsulation obtained.

**Table 3.**

| **Additive** | **% Encapsulated (g additive/g dry solid)x100** |
|---|---|
| | **3 days** |
| Geranic acid | 10.6 |
| Citronellic acid | 8.9 |
| Icaridin | 16.0 |
| IR3535 | 21.0 |
| Geraniol | 11.3 |

### Example 3: MOF +additive (in one single step)

In this type of encapsulation, the additive is added to the synthesis medium with the intention of the latter being retained in the pores during the formation of the framework of the MOF. This has the advantage that the synthesis and the encapsulation are carried out in one single step, thus avoiding the need to first synthesise the material, activate it and subsequently carry out the encapsulation.

In this case in particular, the MIL-53 was synthesised with geranic acid in one single step: 5.20 grams (1.38 10-2 moles) of nonahydrated aluminium nitrate was added into a ball flask together with 1.12 grams (6.74 10-3 moles) of terephthalic acid, 10 mL of distilled water and 9 mL of ethanol. In a separate receptacle, the volume corresponding to 1 gram of additive was added together with 1 mL of ethanol and it was agitated until the complete dissolution thereof, then pouring the contents of the same on the flask. Said flask is placed under agitation under reflux for 3 days at 85°C. The solid was recovered by centrifugation at 10,000 rpm for 10 minutes, it was washed once with ethanol and was recovered again by centrifugation under the same conditions. It was left to dry in the air.

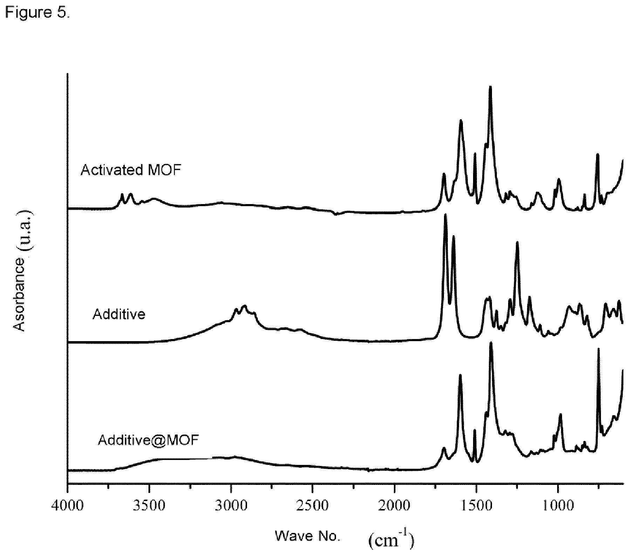

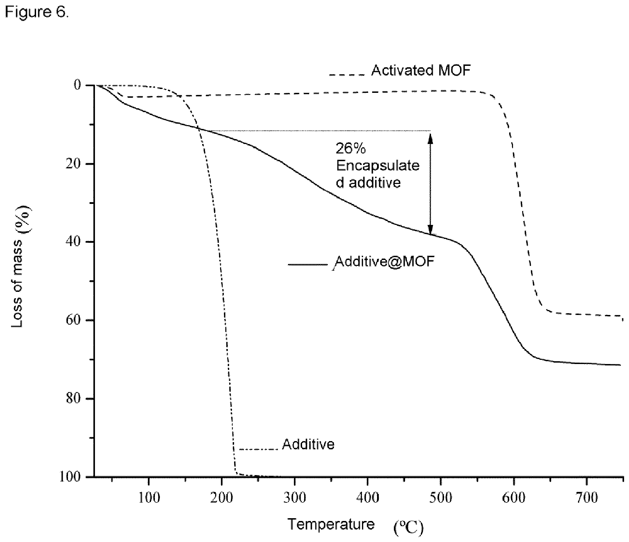

Both the FTIR spectroscopy analysis and thermogravimetry can be observed in figures 5 and 6, in this case with 26 % of encapsulated additive.

### Example 4: MOF +additive (in one single step)

In this type of encapsulation, the additive is added to the synthesis medium with the intention of the latter being retained in the pores during the formation of the structure of the MOF. This has the advantage that the synthesis and the encapsulation are carried out in one single step, thus avoiding the need to first synthesize the material, activate it and subsequently carry out the encapsulation.

In this case in particular, MIL-88 A (Al) was synthesised with any of the additives in one single step:
Two solutions were prepared, namely:
1. 2.98 grams (7.94 10-3 moles) of nonahydrated aluminium nitrate was added together with 10 mL of distilled water into a ball flask.
2. 0.92 grams (7.94 10-3 moles) of fumaric acid was added together with 4.8 mL of a solution of 0.1 g/mL of sodium hydroxide and 10.2 mL of distilled water into a receptacle.

Both receptacles were placed under agitation until transparent solutions were obtained, at this time the content of the receptacle, which contained the fumaric acid, was poured on the ball flask. In the other receptacle, 1 mL of ethanol and the volume corresponding to 1 gram of the additive of interest was added and it was agitated until the total dissolution thereof. The content of the latter was also added to the ball flask which was placed under reflux at 60 °C for 1 hour. The solid was recovered by centrifugation at 10,000 rpm for 10 minutes, it was washed once with ethanol and was recovered again by means of centrifugation under the same conditions. The solid obtained was left to dry in the air.

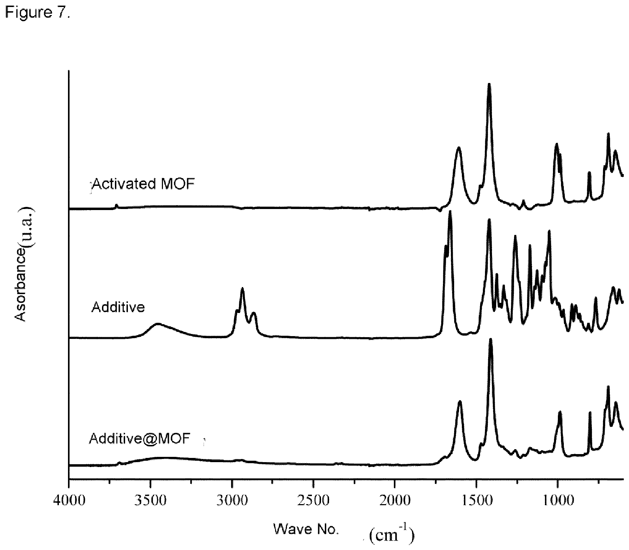

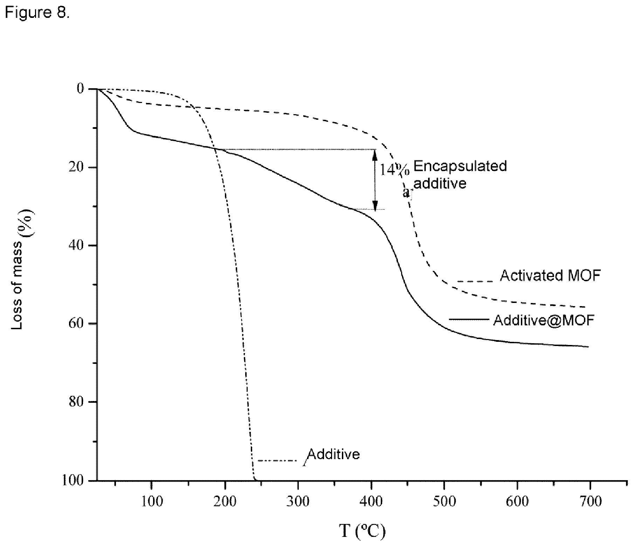

Both the FTIR spectroscopy analysis and the thermogravimetry can be observed in figures 7 and 8, in this case with 14 % of additive encapsulated.

The results of in-situ encapsulation obtained for each one of the additives used are gathered in table 4.

**Table 4.**

| **Additive** | **% Encapsulated (g additive/g dry solid)x100** |
|---|---|
| Geranic acid | 13.4 |
| Citronellic acid | 12.2 |
| Icaridin | 16.6 |
| IR3535 | 21.7 |
| Geraniol | 10.9 |

### Example 5: Chemical compatibility of various encapsulated additives with TCCA and comparison with that of the other additives

A total of 100 grams of mixture of TCCA and different encapsulated additives, in variable proportions, was weighed - according to the quantity of additive encapsulated in the encapsulating matrix so that the quantity of additive was 0.1 % by weight in the mixture. The different mixtures were placed in a 500 mL grinding Erlenmeyer. It was covered with the appropriate device and the latter was fixed with a clamp to the Erlenmeyer.

The Erlenmeyer was placed in the stove at 60 ± 2 °C and was maintained for 15 hours, after which it was dried and it was left to cool at room temperature for one hour.

With the aid of a vacuum pump, the gas contained in the Erlenmeyer was bubbled through three wash bottles, one security vacuum, another which contained approximately 70 mL of potassium iodide 10% by weight and 30 mL of sulphuric acid 10 % by weight and the third also a security vacuum. This operation lasted five minutes, sufficient time for the pressure at the end to be less than 100 mm of Hg.

The wash bottles were disconnected from the Erlenmeyer and the content was drawn off from the second bottle, together with the water from the washing thereof, to another 500 mL Erlenmeyer.

The iodine released was titrated with sodium thiosulphate 0.1 N until the disappearance of the yellow colour.

The results obtained with the microencapsulated additives in contact with TCCA are gathered in table 5, expressing said result in grams of chlorine released as a function of the additive used. The result of chlorine release of 100 g of TCCA also appears under similar conditions as a reference standard.

**Table 5.**

| **TCCA mixtures + encapsulated additives (100 g of TCCA + 0.1 % additive)** | **mg Cl₂** |
|---|---|
| TCCA + citronellic acid encapsulated in silica by impregnation | 11.7 mg |
| TCCA + IR3535 encapsulated in MOF by impregnation (two steps) | 5.3 mg |
| TCCA + IR3535 encapsulated in MOF in-situ (one single step) | 7.6 mg |
| TCCA + geranic acid encapsulated in MOF in-situ (one single step) | 7.0 mg |
| TCCA | 1.4 mg |

Table 6 shows the results obtained from the direct contact of TCCA with some of the additives without encapsulation.

**Table 6.**

| **TCCA mixtures + additives without encapsulation (100 g of TCCA + 0.1 % additive)** | **mg Cl₂** |
|---|---|
| TCCA + IR3535 | 58 mg |
| TCCA + icaridin | 219 mg |
| TCCA + geranic acid | 29 mg |

Table 7 shows the results obtained of TCCA compatibility with the porous material used. As can be observed, some porous materials were chemically incompatible with TCCA since they cause a degassing (release of chlorine gas) greater than 15 mg Cl₂ /100 g halogenated derivative of isocyanuric acid measured under the conditions previously described.

**Table 7.**

| **Mixture 0.2 g material + 100 g TCCA** | **Nature** | **Degassing [mg Cl₂]** |
|---|---|---|
| HKUST-1 | MOF | 8.7 |
| MIL-53 | MOF | 1.1 |
| MIL-88 A (Al) | MOF | 2.8 |
| ZSM-5(Zeolyst) | Zeolite | 9.7 |
| Silica | Precipitated silica | 4.4 |
| ZIF-8 | MOF | 51 |
| UiO 66 | MOF | 35.4 |
| MIL-88 A (Fe) | MOF | 48.5 |
| MIL-68 | MOF | 63.8 |
| Faujasite (zeolite Y, Zeolyst) | Zeolite | 69 |

HKUST-1 is an MOF, the composition of which is [Cu₃(BTC)₂(H₂O)₃]ₙ wherein the metal is copper and the organic ligand is BTC (benzene-1 3 5-tricarboxylate). The structure thereof consists of [Cu₂(O₂CR)₄] units (wherein R is an aromatic ring) which are interconnected to form a three-dimensional skeleton with channels with a pore size of around 0.6 nm. The BET specific surface thereof is around 1000 m²/g.

ZSM-5 is a synthetic zeolite, the chemical formula thereof is NaₙAlₙSi₉₆₋ₙO₁₉₂ 16H₂O.

The BET area thereof is around 400 m²/g. The pore size thereof is between 0.5 and 0.6 nm.

Synthetic zeolites are achieved by way of a hydrothermal synthesis process, that is to say, there is an aqueous medium where the precursors are found which are subjected to high temperatures in an autoclave for a determined time.

## Claims

1. A tablet comprising
a) a halogenated derivative of isocyanuric acid selected from trichloroisocyanuric acid, dichloroisocyanuric acid and a salt of any of these; and
b) a volatile additive, chemically incompatible with the halogenated derivative of isocyanuric acid, which is an insect repellent selected from citronellic acid, geranic acid, geraniol, IR 3535 (ethyl 3-[acetyl(butyl)amino]propanoate) and 10 icaridin, encapsulated in a microporous or mesoporous material; wherein the microporous or mesoporous material has a pore size of between 0.3 nm and 50 nm; a pore volume of between 0.05 cm³/g and 2 cm³/g and a specific surface of between 100 m²/g and 5000 m²/g the microporous or mesoporous material is selected from a mica, a microporous silica, a 15 mesoporous silica, a pyrogenic silica a crystalline silica, a precipitated silica, a gel silica, an alumina, MCM-41, SBA-15, kaolin, smectite, vermiculite, attapulgite, sepiolite, clinoptilolite, mordenite, zeolite A, zeolite X, silicalite, ZSM-5, HKUST-1, MIL-53, MIL-88 A (Al).

2. The tablet according to claim 1, wherein the halogenated derivative of isocyanuric acid is selected from trichloroisocyanuric acid and sodium dichloroisocyanurate.

3. The tablet according to any of the claims 1 to 2, **characterised in that** the quantity of halogenated derivative of isocyanuric acid is between 90 % to 99 % by weight of the total of the tablet.

4. The tablet according to any of the claims 1 to 3, wherein the tablet comprises a quantity of additive of between 0.05 % and 1 % by weight. 30

5. The tablet according to any of the claims 1 to 4, wherein the tablet comprises a quantity of additive of between 0.1 % and 0.2 % by weight.

6. The tablet according to any one of claims 1 to 5, wherein the quantity of additive encapsulated in the microporous or mesoporous material is between 0.1 g additive/ g material and 1.5 g additive/ g material.

7. The tablet according to any of the claims 1 to 6, wherein the microporous or mesoporous material has a pore size of between 0.4 nm and 15 nm, a pore volume of between 0.1 cm³/g and 1.5 cm³/g and a specific surface of between 150 m²/g and 2000 m²/g

8. The tablet according to any of the claims 1 to 7, wherein it also comprises other additional components selected from the group consisting of lubricants, flocculants, algaecides, scavengers of ions responsible for the hardness of the water, and combinations of the same. 10

9. The tablet according to claim 8, wherein said additional components are present in the tablet in a quantity of between 1 % and 8 % by weight with respect to the total of the tablet.

10. A use of the tablet as defined in any of the claims 1 to 9 for treating and disinfecting water.

11. A method for preparing a tablet as defined in any of the claims 1 to 9, comprising a) encapsulating the additive in the microporous or mesoporous material; b) mixing the halogenated derivative of isocyanuric acid with the additive encapsulated in the microporous or mesoporous material; and c) compressing the mixture.

## Patentansprüche

1. Eine Tablette umfassend
a) ein halogeniertes Derivat von Isocyanursäure, das ausgewählt ist aus Trichlorisocyanursäure, Dichlorisocyanursäure und einem Salz von einem davon; und
b) einen flüchtigen Zusatzstoff, der mit dem halogenierten Derivat von Isocyanursäure chemisch inkompatibel ist, welcher ein Insektenschutzmittel ausgewählt aus Citronellinsäure, Geraninsäure, Geraniol, IR 3535 (Ethyl-3-[acetyl(butyl)amino]propanoat) und Icaridin ist, eingekapselt in einem mikroporösen oder mesoporösen Material;
wobei das mikroporöse oder mesoporöse Material eine Porengröße zwischen 0,3 nm und 50 nm hat; ein Porenvolumen zwischen 0,05 cm³/g und 2 cm³/g hat und eine spezifische Oberfläche zwischen 100 m²/g und 5000 m²/g hat; wobei das mikroporöse oder mesoporöse Material ausgewählt ist aus einem Glimmer, einem mikroporösen Siliziumdioxid, einem mesoporösen Siliziumdioxid, einem pyrogenen Siliziumdioxid, einem kristallinen Siliziumdioxid, einem gefällten Siliziumdioxid, einem Gel-Siliziumdioxid, einem Aluminiumoxid, MCM-41, SBA-15, Kaolin, Smektit, Vermiculit, Attapulgit, Sepiolith, Klinoptilolith, Mordenit, Zeolith A, Zeolith X, Silicalith, ZSM-5, HKUST-1, MIL-53, MIL-88 A (AI).

2. Die Tablette nach Anspruch 1, wobei das halogenierte Derivat von Isocyanursäure ausgewählt ist aus Trichlorisocyanursäure und Natriumdichlorisocyanurat.

3. Die Tablette nach einem der Ansprüche 1 bis 2, **dadurch gekennzeichnet, dass** die Menge an halogeniertem Isocyanursäurederivat zwischen 90 und 99 Gew.-% der Gesamtheit der Tablette beträgt.

4. Die Tablette nach einem der Ansprüche 1 bis 3, wobei die Tablette eine Menge an Zusatzstoff zwischen 0,05 und 1 Gew.-% umfasst.

5. Die Tablette nach einem der Ansprüche 1 bis 4, wobei die Tablette eine Menge an Zusatzstoff zwischen 0,1 und 0,2 Gew.-% umfasst.

6. Die Tablette nach einem der Ansprüche 1 bis 5, wobei die Menge des in dem mikroporösen oder mesoporösen Material eingekapselten Zusatzstoffs zwischen 0,1 g Zusatzstoff/g Material und 1,5 g Zusatzstoff/g Material beträgt.

7. Die Tablette nach einem der Ansprüche 1 bis 6, wobei das mikroporöse oder mesoporöse Material eine Porengröße zwischen 0,4 nm und 15 nm, ein Porenvolumen zwischen 0,1 cm³/g und 1,5 cm³/g und eine spezifische Oberfläche zwischen 150 m²/g und 2000 m²/g hat.

8. Die Tablette nach einem der Ansprüche 1 bis 7, wobei sie auch andere zusätzliche Komponenten umfasst, die ausgewählt sind aus der Gruppe bestehend aus Gleitmitteln, Flockungsmitteln, Algiziden, Fängern von Ionen, die für die Wasserhärte verantwortlich sind, und Kombinationen derselben.

9. Die Tablette nach Anspruch 8, wobei die zusätzlichen Komponenten in der Tablette in einer Menge zwischen 1 und 8 Gew.-%, bezogen auf die Gesamtheit der Tablette, vorhanden sind.

10. Eine Verwendung der Tablette wie in einem der Ansprüche 1 bis 9 definiert zur Behandlung und Desinfektion von Wasser.

11. Ein Verfahren zur Herstellung einer Tablette wie in einem der Ansprüche 1 bis 9 definiert, umfassend a) Einkapseln des Zusatzstoffs in das mikroporöse oder mesoporöse Material; b) Mischen des halogenierten Isocyanursäurederivats mit dem in dem mikroporösen oder mesoporösen Material eingekapselten Zusatzstoff; und c) Komprimieren der Mischung.

## Revendications

1. Un comprimé comprenant
a) un dérivé halogéné d'acide isocyanurique choisi parmi l'acide trichloroisocyanurique, l'acide dichloroisocyanurique et un sel de l'un quelconque de ceux-ci ; et
b) un additif volatil, chimiquement incompatible avec le dérivé halogéné de l'acide isocyanurique, qui est un insectifuge choisi parmi l'acide citronellique, l'acide géranique, le géraniol, l'IR 3535 (3-[acétyl(butyl)amino]propanoate d'éthyle) et l'icaridine, encapsulé dans un matériau microporeux ou mésoporeux ;
dans lequel le matériau microporeux ou mésoporeux a une taille de pores comprise entre 0,3 nm et 50 nm ; un volume de pore d'entre 0,05 cm³/g et 2 cm³/g et une surface spécifique d'entre 100 m²/g et 5000 m²/g ; dans lequel le matériau microporeux ou mésoporeux est choisi parmi un mica, une silice microporeuse, une silice mésoporeuse, une silice pyrogénée, une silice cristalline, une silice précipitée, un gel de silice, une alumine, MCM-41 , SBA-15, le kaolin, la smectite, la vermiculite, l'attapulgite, la sépiolite, la clinoptilolite, la mordénite, la zéolite A, la zéolite X, la silicalite, ZSM-5, HKUST-1, MIL-53, MIL-88 A (Al).

2. Le comprimé selon la revendication 1, dans lequel le dérivé halogéné de l'acide isocyanurique est choisi parmi l'acide trichloroisocyanurique et le dichloroisocyanurate de sodium.

3. Le comprimé selon l'une quelconque des revendications 1 à 2, **caractérisé en ce que** la quantité de dérivé halogéné de l'acide isocyanurique est d'entre 90 % à 99 % en poids du total du comprimé.

4. Le comprimé selon l'une quelconque des revendications 1 à 3, dans lequel le comprimé comprend une quantité d'additif d'entre 0,05 % et 1 % en poids.

5. Le comprimé selon l'une quelconque des revendications 1 à 4, dans lequel le comprimé comprend une quantité d'additif d'entre 0,1 % et 0,2 % en poids.

6. Le comprimé selon l'une quelconque des revendications 1 à 5, dans lequel la quantité d'additif encapsulé dans le matériau microporeux ou mésoporeux est d'entre 0,1 g d'additif/g de matériau et 1,5 g d'additif/g de matériau.

7. Le comprimé selon l'une quelconque des revendications 1 à 6, dans lequel le matériau microporeux ou mésoporeux a une taille de pores d'entre 0,4 nm et 15 nm, un volume de pore d'entre 0,1 cm³/g et 1,5 cm³/g et une surface spécifique d'entre 150 m²/g et 2000 m²/g.

8. Le comprimé selon l'une quelconque des revendications 1 à 7, dans lequel il comprend aussi d'autres composants additionnels choisis dans le groupe constitué de lubrifiants, floculants, algicides, piégeurs d'ions responsables de la dureté de l'eau, et des combinaisons de ceux-ci.

9. Le comprimé selon la revendication 8, dans lequel lesdits composants additionnels sont présents dans le comprimé en une quantité d'entre 1 % et 8 % en poids par rapport au total du comprimé.

10. Une utilisation du comprimé tel que défini dans l'une quelconque des revendications 1 à 9 pour le traitement et la désinfection de l'eau.

11. Un procédé de préparation d'un comprimé tel que défini dans l'une quelconque des revendications 1 à 9, comprenant a) encapsuler l'additif dans le matériau microporeux ou mésoporeux ; b) mélanger le dérivé halogéné de l'acide isocyanurique avec l'additif encapsulé dans le matériau microporeux ou mésoporeux ; et c) comprimer le mélange.
